Europäisches Patentamt

European Patent Office

Office européen des brevets

(19)

(11) Veröffentlichungsnummer: **0 166 136**
**A2**

## EUROPÄISCHE PATENTANMELDUNG

(21) Anmeldenummer: **85105661.4**

(22) Anmeldetag: **08.05.85**

(51) Int. Cl.⁴: **A 01 C 7/00, G 05 D 7/06**

(30) Priorität: **28.05.84 DE 3419883**

(43) Veröffentlichungstag der Anmeldung: **02.01.86**
**Patentblatt 86/1**

(84) Benannte Vertragsstaaten: **AT BE CH DE FR GB IT LI LU NL SE**

(71) Anmelder: **Amazonen-Werke H. Dreyer GmbH & Co. KG, Postfach 51, D-4507 Hasbergen-Gaste (DE)**

(72) Erfinder: **Harrsen, Jan, Dipl.-Ing., Breslauerstrasse 3, D-2086 Ellerau (DE)**
Erfinder: **Grosse-Scharmann, Franz, Dr. Dipl.-Ing., Waldstrasse 35, D-2872 Hude i.O (DE)**
Erfinder: **Gattermann, Bernd, Dipl.-Ing., Eichenweg 3, D-2872 Hude i.O (DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

(54) Verfahren und Vorrichtung zum optischen Zählen kleiner Körperchen.

(57) Durch die Erfindung wird ein Verfahren und eine Vorrichtung zum optischen Zählen kleiner Körperchen beschrieben, wobei in einem Meßraum einzelne Ortspunkte selektiv erfaßt werden, so daß über den Meßraum verteilt die Punkte ermittelt werden können, an denen durch ein durchfallendes Körperchen der optische Weg einzelner Elementarlichtschranken unterbrochen oder offen ist. Durch entsprechende Auswertung lassen sich aus der Anzahl der den Lichtweg unterbrechenden Ortspunkte Rückschlüsse auf die Anzahl der tatsächlich den Meßraum passierenden Körperchen ziehen. Die Vorrichtung zur Durchführung des Verfahrens sieht einzelne, den Meßraum umgrenzende Elementarlichtschranken vor, sowie eine Auswerteschaltung zur Erfassung der an den einzelnen Elementarlichtschranken erhaltenen Informationen.

Verfahren und Vorrichtung zum
optischen Zählen kleiner Körperchen

B e s c h r e i b u n g

Die Erfindung bezieht sich auf ein Verfahren zum
optischen Zählen von Saatgutkörnern, Düngemitteln und anderen, in
der Landwirtschaft verwendeten Körperchen, bei dem
die zu zählenden Körper einen Meßraum passieren
und dabei den Strahlengang zwischen einem Lichtemitter und einem Lichtdetektor unterbrechen.
Die Erfindung bezieht sich weiterhin auf eine Vorrichtung zur Durchführung eines solchen Verfahrens,
wobei auf einer Seite des Meßraums ein Lichtemitter
und auf der gegenüberliegenden Seite ein Lichtempfänger angeordnet ist.

Ein solches Verfahren ist z.B. aus der DE-PS
25 34 130 bekannt. Dort werden kleine Körperchen, nämlich auszusäendes Saatgut, in einem
Meßraum durch eine Lichtschranke geschickt. Die
Lichtschranke erzeugt dann für jede Unterbrechung
ihres Strahlengangs Impulse. Die Impulsanzahl
stimmt zwar unter der Voraussetzung mit der Anzahl der hindurchgetretenen Körperchen überein,
daß die Körperchen einzeln und nacheinander die
Lichtschranke passieren. Wenn jedoch mehrere Körperchen im wesentlichen zur gleichen Zeit durch den
Meßraum hindurchtreten, was seine Ursache darin haben kann, daß die Dosierung am Zutritt zum Meßraum
nicht so genau arbeiten kann, daß immer genau ein
Körperchen durch den Meßraum gelangt, können Fehler
auftreten, weil auch in diesem Falle von der Lichtschranke nur ein Zählimpuls abgegeben wird.

Der Erfindung liegt daher die Aufgabe zugrunde, ein

0166136

Verfahren und eine Vorrichtung der eingangs genannten
Art dahingehend zu verbessern, daß auch mehrere, sich
zur gleichen Zeit im Meßraum befindenden Körperchen
einzeln erfaßt werden, so daß insgesamt eine genauere
Zählung möglich ist als dies bei dem bekannten Verfahren der Fall ist.

Diese Aufgabe wird erfindungsgemäß dadurch gelöst,
daß in dem Meßraum mit Hilfe von ein optisches Raster
erzeugenden Lichtstrahlen einzelne Ortspunkte, an
denen der Strahlengang von durch das optische Raster
hindurchtretenden Körpern unterbrochen ist, in aufeinanderfolgenden Abtastzyklen erfaßt und als einen
oder mehrere Körper beschreibende Informationen festgehalten werden und daß dann die erhaltenen Körper
beschreibenden Informationen der einzelnen Abtastzyklen miteinander verglichen werden und daß dann
aus den bei dem Vergleich festgestellten Variationen
der unterbrechenden Ortspunkte Zählsignale abgeleitet werden, die der hindurchtretenden Anzahl einzelner
Körper entsprechen.

Gemäß diesen Merkmalen wird der Meßraum differentiell,
d.h. also an einzelnen Punkten oder Bereichen betrachtet. Dadurch ist es möglich, festzustellen, ob in diesen einzeln betrachteten Bereichen der Lichtstrahl unterbrochen wird oder aber durchgängig ist. Wenn festgestellt wird, daß an einem gerade betrachteten Punkt
der spezielle, diesen Punkt bzw. Bereich ausleuchtende Lichtstrahl unterbrochen ist, wird diese Information
dahingehend gedeutet, daß dort ein Körper bzw. ein Teil
eines Körpers den Lichtstrahl unterbricht. Die Bereiche,
in denen in einem ersten Abtastzyklus festgestellt wird,
daß sie den Lichtweg unterbrechen, werden daher als
körperbeschreibende Informationen festgehalten, beispielsweise in einem Datenspeicher. ln einem nächsten
Abtastzyklus werden die einzelnen Bereiche bzw. Ortspunkte erneut abgetastet und die dabei erhaltenen Informationen mit den im vorhergehenden Zyklus erhaltenen Informationen verglichen. Dies eröffnet die Möglichkeit, das Hindurchtreten der einzelnen Körperchen zeitlich und räumlich zu verfolgen. Dadurch ist es dann auch möglich, mehrere Körperchen, die sich zur selben Zeit, aber an verschiedenen Orten des Meßraums befinden, zu erfassen.

Während das erfindungsgemäße Verfahren sowohl mit einer eindimensionalen Betrachtung, d.h. die Lichtstrahlen gehen nur von einer Seite aus und erzeugen dabei ein Strichraster, oder auch mit einer dreidimensionalen Betrachtung, bei die Lichtstrahlen ein kubisches Raster zeugen würden, durchgeführt werden kann, hat es sich als vorteilhaft erwiesen, den Meßraum von zwei Seiten zu betrachten, d.h. also, ein optisches, zweidimensionales Raster von sich schneidenden Lichtstrahlen zu verwenden. Ein solches zweidimensionales Raster macht es gegenüber einer eindimensionalen Betrachtung möglich, auch solche Körperchen mitzuerfassen, die in Betrachtungsrichtung hinter einem ersten Körperchen den Meßraum passieren. Dabei ist es dann bezüglich der Auswertung der körperbeschreibenden Informationen günstig, wenn sich die Lichtstrahlen in einem Winkel von 90° schneiden.

In weiterer vorteilhafter Ausgestaltung des Verfahrens werden die Informationen der einzelnen Abtastzyklen jeweils parallel verarbeitet, weil dadurch eine schnellere Möglichkeit der Auswertung gegeben ist, als dies bei einer seriellen Verarbeitung möglich ist.

Gemäß einer weiteren vorteilhaften Ausgestaltung des Verfahrens wird dann, wenn in einem ersten Zyklus eine für einen Körper typische Information erhalten wird und in folgenden Zyklen zwei oder mehrere Körper erkannt werden, nur ein Körper gezählt, wenn nach Hindurchtreten des einen Körpers auch die für die weiteren Körper erhaltenen Informationen ausbleiben und daß eine der festgestellten Anzahl entsprechende Information festgehalten wird, wenn die nach Hindurchtreten des einen Körpers auf weitere Körper hinweisende Informationen auch in den folgenden Zyklen vorhanden sind. Durch diese Maßnahme wird erreicht, daß sogenannte Scheinkörper erfaßt und von der Zählung ausgeschlossen werden können. Scheinkörper sind solche Körper, die nicht tatsächlich vorhanden sind, die aber bei der zweidimensionalen Betrachtung durch Kreuzung der Schatten einzelner Körper anscheinend vorhanden sind. Aufgrund dieser Maßnahme wird dadurch die Zählung noch genauer.

Zur weiteren Verbesserung der Genauigkeit der Zählung kann vorgesehen sein, daß die in den einzelnen Zyklen erhaltenen Ortspunkte addiert werden, um ein Volumenmaß zu erhalten und daß das erhaltene Körpervolumen mit einem Minimal-und einem Maximalwert verglichen wird und daß nur dann ein Zählsignal abgegeben wird, wenn das erhaltene Volumenmaß innerhalb dieser Extremwerte liegt. Durch diese Maßnahmen werden nur Körper im definierten Toleranzbereich akzeptiert. Körper, die andere Ausmaße haben, werden von der Zählung ausgeschlossen, so daß insbesondere Fremdkörper nicht zu Fehlern bei der Zählung führen. Die Extremwerte können dabei abhängig von den gewonnen Volumendaten einer bestimmten Anzahl von Körpern ausgewählt werden.

Das erfindungsgemäße Verfahren kann mit einer eingangs genannten Vorrichtung durchgeführt werden, bei der erfindungsgemäß als Lichtempfänger diskrete, einen separaten Nachweis ermöglichende Empfangszellen verwendet werden, so daß mehrere Elementarlichtschranken innerhalb des Meßraums gebildet werden, deren Ausgangssignale einer Auswerteschaltung zugeführt werden, in der sie zyklisch verarbeitet werden. Die einzelnen Elementarlichtschranken bilden ein Lichtraster im Meßraum, so daß für einzelne Bereiche innerhalb des Meßraums festgestellt werden kann, ob dort ein Körperchen vorliegt oder nicht.

In vorteilhafter Ausgestaltung der Vorrichtung werden zwei im rechten Winkel zueinander angeordnete, sich gegenüberliegende Lichtemitterzeilen und Lichtempfängerzeilen (XY-Zeilen) vorgesehen, so daß die von den Lichtemitterzeilen ausgehenden Strahlen sich kreuzen und ein optisches Gitterraster bilden und daß die Auswerteschaltung einen Multiplikator umfaßt, in dem die als logische Signale erhaltenen Informationen der einzelnen Empfangszellen der X-Zeile mit denen der Y-Zeile multipliziert werden, so daß für jeden Abtastzyklus eine Matrix Z entsteht, die charakteristisch dafür ist, wie der Meßraum von den beiden Empfangszeilen gesehen wird. In der durch diese Maßnahmen erhaltenen Matrix werden die Stellen, an denen die einzelnen Körper vorliegen, erkenntlich, z.B. in dem dort eine logische 1 anstelle einer 0 registriert wird.

In weiterer vorteilhafter Ausgestaltung umfaßt die Auswerteschaltung eine Abtasteinrichtung, in der die Zeilen der Z-Matrix abgetastet werden und die für jeden 0/1-Wechsel oder 1/0-Wechsel entsprechende Positionen in einem Datenfeld vermerkt. Dadurch kann die aktuelle Position des linken Randes eines Körpers und des rechten Randes eines Körpers und damit des Körpers selbst festgestellt werden.

Wenn die Auswerteschaltung weiterhin eine Vergleichsschaltung umfaßt, in der die Daten der Zeilen zueinander in Beziehung gesetzt werden, dann läßt sich in einem zeitlichen Ablauf feststellen, ob bzw. wie sich ein festgestelltes körperbeschreibendes Datenfeld verändert. Daraus kann dann die Information über die Anzahl der Körper ermittelt werden. Weitere Merkmale und Einzelheiten der Erfindung können den Unteransprüchen, der Beschreibung und der Zeichnung entnommen werden.

Im folgenden wird die Erfindung anhand der Zeichnung weiter erläutert und beschrieben. Dabei zeigt

Figur 1   eine Prinzipskizze einer erfindungsgemäßen Vorrichtung zur Durchführung des erfindungsgemäßen Verfahrens,

Figur 2a einen Längsschnitt durch den Meßraum mit zwei im wesentlichen gleichzeitig hindurchfallenden Körperchen zur Zeit $t_1$,

Figur 2b einen Längsschnitt durch den Meßraum mit zwei im wesentlichen gleichzeitig hindurchfallenden Körperchen zu einem gegenüber Figur 2a späteren Zeitpunkt $t_2$,

Figur 3a eine Prinzipskizze zur Darstellung der Erfassung von zwei gleichzeitig durch den Meßraum hindurchtretenden Körperchen,

Figur 3b eine Prinzipskizze zur Erläuterung der Probleme bei einer zweidimensionellen Betrachtungsweise,

Figur 4 die Anordnung der Empfangsdiodenzeilen und Sendediodenzeilen derart, daß sie gereinigt werden können und

Figur 5 eine Schnittdarstellung entlang der Linie A-B der Figur 3.

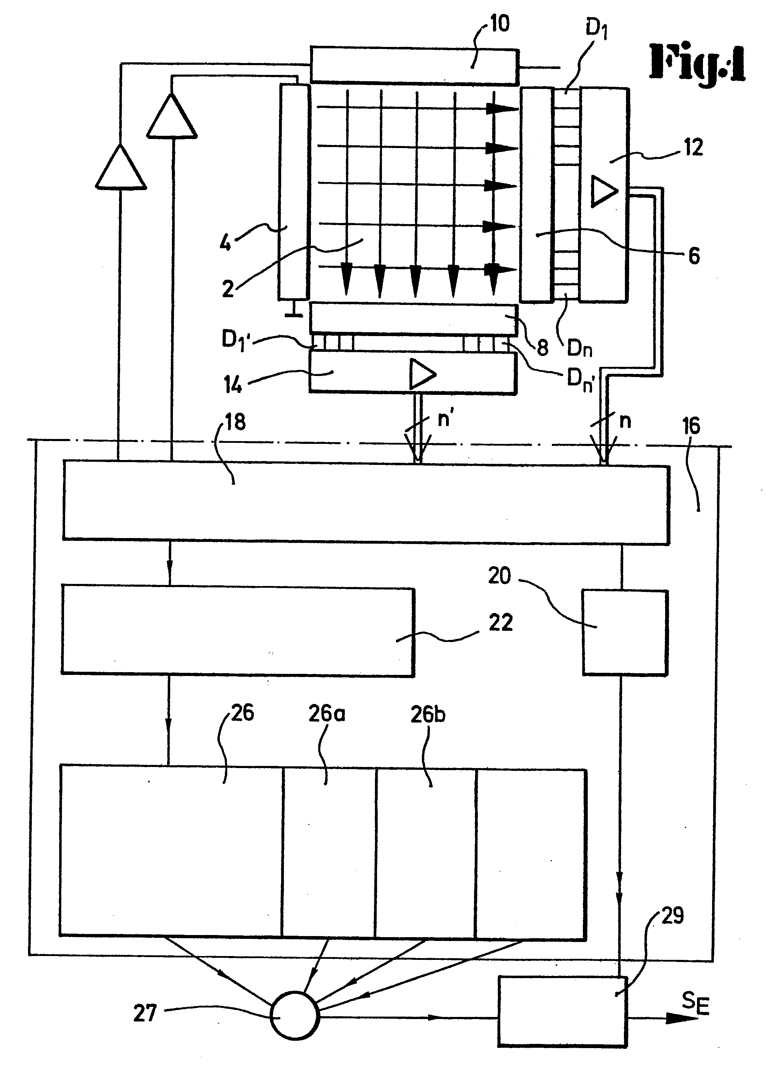

In Figur 1 ist mit 2 ein Meßraum bezeichnet, durch den senkrecht zur Darstellungsebene einzelne Körperchen, wie z.B. Saatgutkörner einer Sämaschine, hindurchfallen um gezählt zu werden. Zu diesem Zweck sind in einer horizontalen Ebene am Rande des Meßraumes eine Leuchtdiodenzeile 4, mit einer gegenüberliegenden Empfangsdiodenzeile 6 sowie in einem Winkel von 90$^{\circ}$ dazu eine weitere Leuchtdiodenzeile 10 mit einer zugehörigen, gegenüberliegenden Empfangsdiodenzeile 8 angeordnet. Die Empfangsdiodenzeilen 6 und 8 bestehen jeweils aus einzelnen, nebeneinander angeordneten Lichtempfangszellen

D1 bis Dn bzw. D1' bis Dn', so daß sich überkreuzende, ein zweidimensionales Raster bildende Elementarlichtschranken den Meßraum überwachen.

Die an den einzelnen Empfangszellen D1 bis Dn bzw. D1' bis Dn' erfaßten, selektiven Signale werden in zugeordneten Verstärkereinrichtungen 12 bzw. 14 verstärkt und in logische Signale umgewandelt. So wird beispielsweise einer Empfangsdiodenzelle, die einen Lichtstrahl empfängt, eine logische Null zugeordnet und einer Zelle, die keinen Lichtstrahl empfängt, eine logische Eins.

Die erhaltenen logischen Signale werden in einer Auswerteeinrichtung 16, was weiter unten noch näher beschrieben werden wird, verarbeitet.

In der Auswerteeinrichtung 16 werden die Zeileninformationen zunächst in einer Abtasteinrichtung 18 erfaßt, wobei dies so geschieht, daß die einzelnen Zustände der Lichtempfangszellen D1 bis D n bzw. D1' bis Dn' ermittelt werden, wie sie in einem bestimmten Zeitpunkt T vorliegen. Zu diesem Zweck steht die Datenabtasteinrichtung 18 mit einer Zeitschaltung 20 in Verbindung.

Von der Datenabtasteinrichtung 18 werden die Daten an einen Datenpuffer 22 weitergegeben, wobei dieser die Signale speichert, die zu einer bestimmten Zeit sowohl in der Empfangsdiodenzeile 6 (im folgenden Y-Zeile genannt) als auch in der Empfangsdiodenzeile 8 (im folgenden X-Zeile genannt) vorliegen; d.h. mit anderen Worten werden Momentaufnahmen der von den Strahlen durchkreuzten Ebene gemacht, wie sie die Empfangsdiodenzeilen X bzw. Y zu einer bestimmten Zeit sehen. Solche Bildzeilenaufnahmen werden in bestimmten zeitlichen Abständen hintereinander zyklisch durchgeführt und jeweils in Datenpuffer gespeichert. Vom Datenpuffer werden die einzelnen Zeilen dann der Auswerteschaltung 26 zugeführt, in der die durch die verschiedenen Zyklen erhaltenen Informationen zueinander in Beziehung gesetzt werden, so daß sich die Anzahl der den Meßraum passierenden Körperchen bestimmen läßt.

Wie diese Information über die Anzahl dieser Körperchen gewonnen werden kann, soll unter Bezugnahme auf die Prinzipskizzen 2a, 2b anhand eines Beispiels erläutert werden. Dort ist der Meßraum 2 jeweils geschnitten dargestellt und es sind zwei Körper a und b zu erkennen, die in Z-Richtung durch den Meßraum fallen. Die Ebene, in der das optische Raster aufgebaut wird, ist mit $L_E$ bezeichnet. Die Prinzipskizze 2a stellt dabei eine Momentaufnahme zur Zeit $t_1$ dar, wie sie von den senkrechtrecht zur Zeichenebene verlaufenden, sich in Y-Richtung erstreckenden Lichtstrahlen als Momentaufnahme auf die zugeordneten Empfangsdiodenzeile, deren einzelne Empfangszellen D1 bis Dn als Kreise angedeutet sind, projiziert werden.

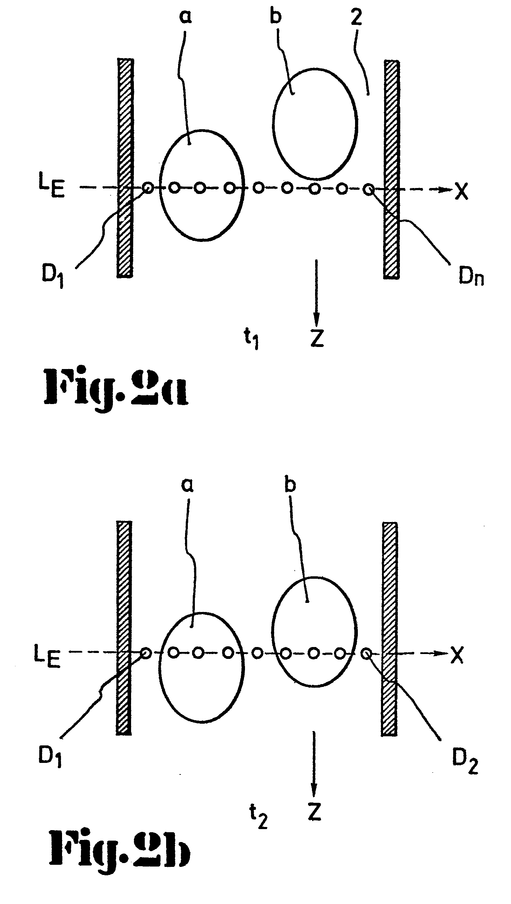

Zum Zeitpunkt $t_1$ (vgl. Figur 2a) erzeugt die dargestellte Empfangsdiodenzeile die in der Tabelle 1 für die Y-Zeile die dort zu dem Zeitpunkt $t_1$ aufgeführte Abfolge logischer Signale. Für die X-Zeile läßt sich in entsprechender Weise, was in den Zeichnungen nicht dargestellt ist, ebenfalls eine entsprechende Abfolge von logischen Signalen erhalten. Zu einem Zeitpunkt $t_2$ (vgl. Figur 2b) sind beide Körner etwas tiefer gefallen, so daß sich, was wiederum nur für die Y-Zeile in den Figuren verdeutlicht ist, die in der Tabelle zum Zeitpunkt $t_2$ ergebeneden Abfolgen für die gesamte Y- bzw. X-Zeile erhalten lassen.

Tabelle 1

|       | Y-Zeile    | X-Zeile    |
|-------|------------|------------|
| $t_1$ | 0111000000 | 0011100000 |
| $t_2$ | 0111011100 | 0011111100 |
| $t_3$ | 0000011100 | 0000011100 |
| $t_4$ | 0000000000 | 00000000CC |

Die so für die X- bzw. Y-Zeilen erhaltenen Werte werden dann im Auswerterechner miteinander multipliziert. Dadurch ergibt sich je Zeile X, Y eine Matrix Z. Nachstehend sind die Matrizen für die Messungen zu den Zeitpunkten $t_1$ - $t_3$ jeweils dargestellt. Es läßt sich erkennen, daß die Matrizen eine Draufsicht darstellen, wie sie von den beiden Empfangsdiodenzeilen 6 bzw. 8 in nacheinanderfolgenden Zeitpunkten gesehen werden.

**Matrix für Messung "$t_1$":**

```
Y 0  . . . . . . . . . .
  1  . . 1 1 1 . . . . .
  2  . . 1 1 1 . . . . .
  3  . . 1 1 1 . . . . .
  4  . . . . . . . . . .
  5  . . . . . . . . . .
  6  . . . . . . . . . .
  7  . . . . . . . . . .
  8  . . . . . . . . . .
  9  . . . . . . . . . .

     0 1 2 3 4 5 6 7 8 9
                       X
```

Matrix für Messung "$t_2$":

```
Y 0   . . . . . . . . . .
  1   . . 1 1 1 1 1 1 . .
  2   . . 1 1 1 1 1 1 . .
  3   . . 1 1 1 1 1 1 . .
  4   . . . . . . . . . .
  5   . . 1 1 1 1 1 1 . .
  6   . . 1 1 1 1 1 1 . .
  7   . . 1 1 1 1 1 1 . .
  8   . . . . . . . . . .
  9   . . . . . . . . . .

      0 1 2 3 4 5 6 7 8 9
                        X
```

Matrix für Messung "$t_3$":

```
Y 0   . . . . . . . . . .
  1   . . . . . . . . . .
  2   . . . . . . . . . .
  3   . . . . . . . . . .
  4   . . . . . . . . . .
  5   . . . . . 1 1 1 . .
  6   . . . . . 1 1 1 . .
  7   . . . . . 1 1 1 . .
  8   . . . . . . . . . .
  9   . . . . . . . . . .

      0 1 2 3 4 5 6 7 8 9
                        X
```

Die Zeilen der Z-Matrix werden dann abgetastet. Bei einem Null/Eins-Wechsel, welcher dem linken Rand eines Körpers entspricht, wird die aktuelle Position des Körpers in einem dem Körper zugeordneten Datenfeld vermerkt. Ab hier werden alle Einser-Informationen zu einem Eins/Null-Wechsel, welcher dem linken Rand eines Körperchens entspricht, gezählt. Beim Erreichen des Eins/Null-Wechsels wird die Grenzposition des Körpers dann zum Vergleich mit der nächsten Zeile vermerkt.

Bei dieser Vorgehensweise bauen sich für jeden gefundenen Körper "körperbeschreibende" Informationen bzw. Datenfelder auf, die Aufschluß über die Größe des Körpers sowie über die Konturen geben.

Durch Vergleich der für die einzelnen Zeilen erhaltenen körperbeschreibenden Informationen kann nun festgestellt werden, wie sich die Körper durch den Meßraum bewegen. Dabei stellt sich dann entweder heraus, daß sich beim Vergleich keine Veränderungen ergeben, oder aber eine Zunahme, eine Stabilisierung oder eine Abnahme des Umfangs. Dieser festgestellten Abfolge kann nun die Aussage:"ein Körper"zugeordnet werden.

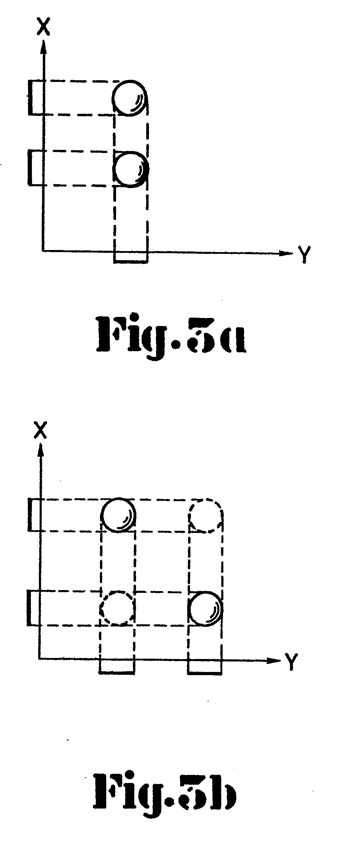

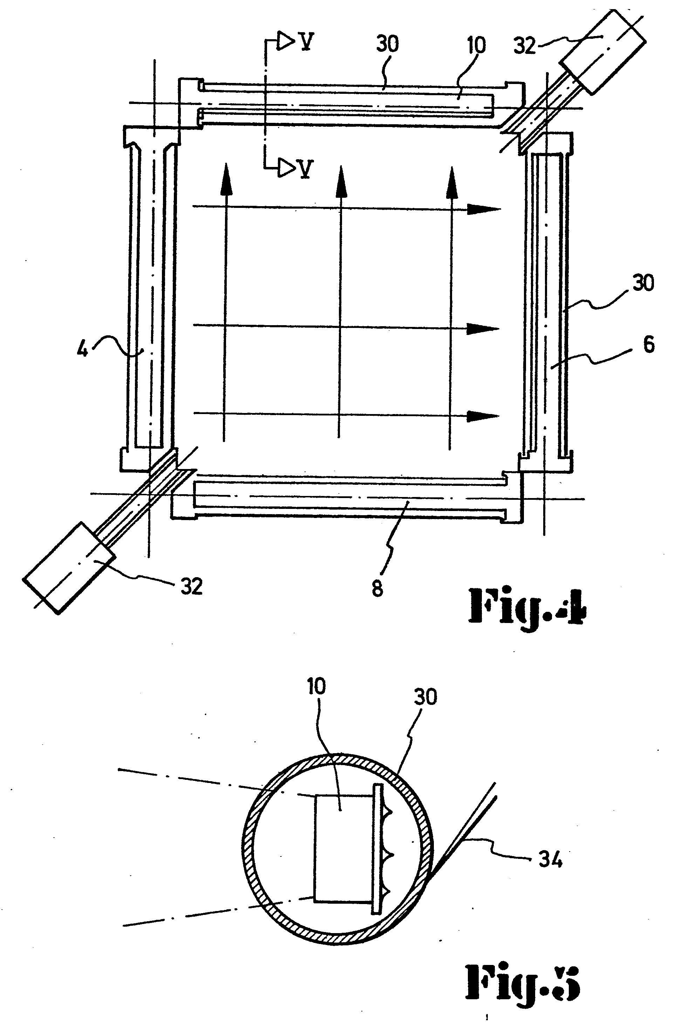

Die zweidimensionale Betrachtung ermöglicht es, zwei bezüglich einer Betrachtungsrichtung hintereinander- und bezüglich der anderen Betrachtungsrichtung nebeneinanderliegende Körperchen zu erkennen (vgl. Figur 3a). Allerdings werden, wie anhand von Figur 3b skizzenhaft dargestellt ist, bei gegeneinander versetzten Körpern durch Kreuzung der Schatten einzelner Körper bei der beschriebenen Art der Auswertung Scheinkörper erzeugt, die tatsächlich nicht vorhanden sind.

Um dies zu verhindern, und damit eine genauere Erfassung der tatsächlich durch den Meßraum hindurchtretenden Körperchen zu ermöglichen, wird bei der Auswertung in der Auswerteschaltung zunächst von der Prämisse ausgegangen, daß, wenn aus einem in der Z-Matrix erkannten Körper eine Gruppe aus zwei oder mehreren Körpern entsteht, dafür die Ursache in einem zweiten Körperchen liegt. Die Scheinkörper werden bei dem erhaltenen Meßergebnis dann verschwinden, wenn das Ende des ersten Körpers erreicht ist. In diesem Falle wird dann nur ein Körper gezählt.

Verschwinden die Scheinkörper in der erhaltenen Z-Matrix nicht, d.h. also, wenn nicht nur ein Körper sichtbar übrig bleibt, so wird gefolgert, daß es sich um mehrere Körper gehandelt haben muß, die gleichzeitig in den Meßraum eingetreten sind. Dann wird ein der Anzahl der festgestellten Körper entsprechendes Signal erzeugt.

Neben dieser zusätzlichen Untersuchung, die in der Auswerteschaltung symbolisch in dem Analysenblock 26a durchgeführt wird, können zur Verfeinerung des Meßergebnisses noch weitere Analysen in weiteren Analysenblöcken 26 b usw. durchgeführt werden.

Eine solche zusätzliche Analysemöglichkeit besteht darin, daß bevor das einen Körper andeutende Ausgangssignal erzeugt wird, ein durch Addition der Zeilenwerte in der Matrix erhaltenes Volumenmaß, bzw. Körpervolumen entnommen wird, welches mit einem Minimal- und einem Maximalwert verglichen wird. Dabei werden dann nur solche Körper akzeptiert, die in dem dazwischenliegenden Bereich liegen. Die Grenzwerte min. und max. können aus den gewonnen Volumendaten einer bestimmten Anzahl von Körpern ausgewählt werden. Mit dieser zusätzlichen Analyse können Fremdkörper aus der Zählung ausgeschlossen werden.

Nach der Durchführung dieser Analysen bzw. Auswertungsschritten in den Blöcken 26, 26a, 26b wurden die Ergebnisse gesammelt (27). In der Schaltung 29 wird die Körneranzahl pro Zeiteinheit ermittelt und als Ergebnissignal $S_E$ ausgegeben.

Um weiterhin sicherzustellen, daß die erhaltenen Meßergebnisse nicht durch Verunreinigungen der optischen Elemente fehlerhaft beeinflußt werden, können oder sollten die optischen Elemente gereinigt werden. Eine Möglichkeit dies zu tun, ist in den Figuren 4 und 5 dargestellt. Dort sind die Leuchtdiodenzeilen und Empfangsdiodenzeilen in einer drehbaren Glasumhüllung 30 untergebracht. An sich diagonal gegenüberliegenden Ecken ist jeweils eine Antriebseinrichtung 32 vorgesehen, die in geeigneter Weise die Glasröhren um die Empfangsdiodenzeilen bzw. Sendediodenzeilen dreht.

Ein Schaber 34 (vgl. Figur 5) streift entlang der Oberfläche der Glasröhren und reinigt diese, wenn sie kreisförmig angetrieben werden.

GRUNECKER. KINKELDEY. STOCKMAIR & PARTNER

PATENTANWÄLTE
EUROPEAN PATENT ATTORNEYS

A GRUNECKER DIPL ING
DR H KINKELDEY. DIPL ING
DR W STOCKMAIR. DIPL ING AE E CALTECH
DR K SCHUMANN. DIPL -PHYS
P H JAKOB DIPL ING
DR G BEZOLD DIPL CHEM
W MEISTER. DIPL ING
H HILGERS DIPL ING
DR H MEYER-PLATH DIPL ING

8000 MUNCHEN 22
MAXIMILIANSTRASSE 5I

0166136

P 18 857

Verfahren und Vorrichtung zum optischen
Zählen kleiner Körperchen

P a t e n t a n s p r ü c h e

1. Verfahren zum optischen Zählen von Saatgutkörnern, Düngemitteln und anderen, in der Landwirtschaft verwendeten Körperchen,
bei dem die zu zählenden Körper einen Meßraum passieren
und dabei den Strahlengang zwischen einem Lichtemitter
und einem Lichtdetektor unterbrechen, dadurch g e -
k e n n z e i c h n e t, daß in dem Meßraum mit Hilfe
von ein optisches Raster erzeugenden Lichtstrahlen
einzelne Ortspunkte, an denen der Strahlengang von
durch das optische Raster hindurchtretenden Körpern
unterbrochen ist, in aufeinanderfolgenden Abtastzyklen erfaßt und als einen oder mehrere Körper beschreibende Informationen festgehalten werden und daß
dann die erhaltenen körperbeschreibenden Informationen
der einzelnen Abtastzyklen miteinander verglichen werden und daß dann aus den bei dem Vergleich festgestellten Variationen der unterbrechenden Ortspunkte
Zählsignale abgeleitet werden, die der hindurchtretenden Anzahl einzelner Körper entsprechen.

2. Verfahren nach Anspruch 1, dadurch g e k e n n - z e i c h n e t, daß das optische Raster ein von sich schneidenden Lichtstrahlen erzeugtes, zweidimensionales Raster ist.

3. Verfahren nach Anspruch 1 und 2, dadurch g e k e n n - z e i c h n e t, daß sich die Lichtstrahlen in einem Winkel von 90° schneiden.

4. Verfahren nach einem der vorangegangenen Ansprüche, dadurch g e k e n n z e i c h n e t, daß die Informationen der einzelnen Abtastzyklen jeweils parallel ausgewertet werden.

5. Verfahren nach einem der vorangegangenen Ansprüche, dadurch g e k e n n z e i c h n e t, daß dann, wenn in einem ersten Zyklus eine für einen Körper typische Information erhalten wird und im folgenden Zyklus zwei oder mehrere Körper erkannt werden, nur ein Körper gezählt wird, wenn nach Hindurchtreten des einen Körpers auch die für die weiteren Körper erhaltenen Informationen ausbleiben und daß eine der festgestellten Anzahl entsprechende Information festgehalten wird, wenn die nach Hindurchtreten des einen Körpers auf weitere Körper hinweisenden Informationen auch in dem folgenden Zyklus vorhanden sind.

6. Verfahren nach Anspruch 1, dadurch g e k e n n - z e i c h n e t, daß die in den einzelnen Zyklen erhaltenen Ortspunkte addiert werden, um eine Volumenmaß zu erhalten und daß das erhaltene Körpervolumen mit einem Minimalwert und einem Maximalwert verglichen wird und daß nur dann ein Zählsignal abgegeben wird, wenn das erhaltene Volumenmaß innerhalb dieser Extremwerte liegt.

7. Verfahren nach Anspruch 6, dadurch g e k e n n - z e i c h n e t , daß die Extremwerte abhängig von den gewonnen Volumendaten einer bestimmten Anzahl von Körpern ausgewählt werden.

8. Vorrichtung zur Durchführung des Verfahrens nach den vorangegangenen Ansprüchen, mit einem auf einer Seite des Meßraumes angeordneten Lichtemitter und mit einem auf der gegenüberliegenden Seite ange- ordneten Lichtempfänger, dadurch g e k e n n z e i c h - n e t , daß als Lichtempfänger diskrete, einen separaten Nachweis ermöglichende Lichtempfangszellen (d1 - dn, d1' - dn') verwendet werden, so daß mehrere Elementarlichtschranken innerhalb des Meßraumes (2) gebildet werden, deren Ausgangssignale einer Auswerteeinrichtung (16) zugeführt werden, in der sie zyklisch verarbeitet werden.

9. Vorrichtung nach Anspruch 8, dadurch g e k e n n - z e i c h n e t , daß zwei in rechtem Winkel zueinander angeordnete, sich gegenüberliegende Lichtemitter- und Lichtempfängerzeilen (4, 6; 10, 8) vorgesehen sind, so daß die von den Lichtemittern (4, 10) ausgehenden Strahlen sich kreuzen und ein optisches Raster bilden und daß die Auswerteeinrichtung (16) einen Multiplikator umfaßt, in dem die als logischen Signale erhaltenen Informationen der einzelnen Empfangszellen ($D_1$ - $D_n$; $D_1$, - $D_n$,) der X-Zeile (8) mit denen der Y-Zeile (6) multipliziert werden, so daß für jeden Abtastzyklus eine Matrix Z entsteht, die charakteristisch dafür ist, wie der Meßraum von dem beiden Empfangszeilen (6. 8) gesehen wird.

10. Vorrichtung nach Anspruch 9, dadurch g e k e n n z e i c h n e t , daß die Aus- werteeinrichtung (16) eine Abtasteinrichtung (18) umfaßt, in der die Zeilen der Z-Matrix abgetastet werden und die für jeden Null/Eins-Wechsel oder Eins/Null-Wechsel entsprechende Positionen in einem Datenfeld vermerkt.

11. Vorrichtung nach einem der Ansprüche 8 - 10, dadurch g e k e n n z e i c h n e t, daß die Auswerteeinrichtung (16) eine Vergleichsschaltung (26) umfaßt, in der die Daten der Zeile zueinander in Beziehung gesetzt werden.

12. Vorrichtung nach einem der Ansprüche 8 - 11, dadurch g e k e n n z e i c h n e t, daß als Lichtempfangszellen diskrete Empfangsdioden ($D_1$ - $D_n$; $D_{1'}$ - $D_{n'}$) mit zugeordneten Verstärkeranordnungen (12, 14) vorgesehen sind.

13. Vorrichtung nach einem der Ansprüche 8 - 11, dadurch g e k e n n z e i c h n e t, daß als Empfangszellen ein CCD-Bildsensorelement vorgesehen ist, dessen serielle Ausgangssignale über einen Seriellparallelwandler der Auswerteschaltung (16) zugeführt werden.

14. Vorrichtung nach mindestens einem der vorangegangenen Ansprüche, dadurch g e k e n n z e i c h n e t, daß die Leuchtdiodenzeilen (4, 10), und die Empfangsdiodenzeilen (6, 8) jeweils in einer drehbaren Glasröhre (30) angeordnet sind, und daß eine Antriebseinrichtung (32, 32') für die Glasröhren zum drehbaren Antrieb vorgesehen ist und daß jeweils ein Schaber (34) so angeordnet ist, daß er bei der Drehung der Glasröhren diese reinigt.

Fig.1

0166136

**Fig.2a**

**Fig.2b**

0166136

X

Y

**Fig.5a**

X

Y

**Fig.5b**

**Fig.4**

**Fig.5**